# EUROPEAN PATENT APPLICATION

(11) **EP 4 841 860 A1**
(43) Date of publication of application: **18.11.2026**
(21) Application number: 25213872.2
(22) Date of filing: 06.11.2025
(51) Int. Cl.: H02J 9/06, H02J 7/70, H02B 1/20

(54) **ENERGY STORAGE INTEGRATED CONTROL CABINET AND ENERGY STORAGE SYSTEM**

(30) Priority: 14.05.2025 CN 202510621731
(71) Applicant: Zhejiang Jinko Energy Storage Co., Ltd., Jiaxing, Zhejiang 314415 (CN)
(72) Inventor: GE, Shaorong, Haining City, Jiaxing, Zhejiang, 314415 (CN); ZHANG, Luhua, Haining City, Jiaxing, Zhejiang, 314415 (CN); SUN, Xuebing, Haining City, Jiaxing, Zhejiang, 314415 (CN); WANG, Xiang, Haining City, Jiaxing, Zhejiang, 314415 (CN); LIU, Shuozhen, Haining City, Jiaxing, Zhejiang, 314415 (CN); WANG, Xiaojie, Haining City, Jiaxing, Zhejiang, 314415 (CN)
(74) Representative: Herrero & Asociados, S.L.

(57) **Abstract**

The present application relates to an energy storage integrated control cabinet (100) and an energy storage system (1). The energy storage integrated control cabinet (100) includes a cabinet body (10), an AC/DC power distribution assembly (20), a DC combiner main loop (30), and a cable assembly (40). The cabinet body (10) includes an uninterruptible power supply compartment (110), a power distribution compartment (120) and a wiring compartment (130) from top to bottom in a height direction of the cabinet body (10). The AC/DC power distribution assembly (20) is disposed in the power distribution compartment (120). The DC combiner main loop (30) is disposed in the power distribution compartment (120) and located on one side of the AC/DC power distribution assembly (20) in a first direction perpendicular to the height direction of the cabinet body (10).

## Description

### TECHNICAL FIELD

The present application relates to the field of energy storage, and in particular, to an energy storage integrated control cabinet and an energy storage system.

### BACKGROUND

At present, two metrics for battery energy storage systems including energy density and cost are very concerned in the market. Taking energy storage container products as an example, a prevailing trend is for containers of the same size to store more energy and integrate more equipment.

### SUMMARY

An energy storage integrated control cabinet includes a cabinet body, an AC/DC power distribution assembly, a DC combiner main loop, and a cable assembly. An accommodation space inside the cabinet body includes an uninterruptible power supply compartment, a power distribution compartment and a wiring compartment from top to bottom along a height direction of the cabinet body. The AC/DC power distribution assembly is disposed in the power distribution compartment. The DC combiner main loop is disposed in the power distribution compartment and located on one side of the AC/DC power distribution assembly in a first direction perpendicular to the height direction of the cabinet body.

In some embodiments, the DC combiner main loop includes two branch loop assemblies arranged in a second direction, and any two of the second direction, the first direction and the height direction of the cabinet body are perpendicular to each other. Each of the two branch loop assemblies includes a circuit breaker assembly. The circuit breaker assembly has a negative input copper busbar and a positive input copper busbar both arranged in the first direction, and a negative output copper busbar and a positive output copper busbar both arranged in the second direction.

In some embodiments, each of the branch loop assemblies includes an upper DC fuse and a lower DC fuse arranged vertically along the height direction of the cabinet body. A top and a bottom of the upper DC fuse are respectively connected to the negative input copper busbar and the negative output copper busbar. A top and a bottom of the lower DC fuse are respectively connected to the positive input copper busbar and the positive output copper busbar.

In some embodiments, the AC/DC power distribution assembly includes an air switch group, a first output terminal block and a second output terminal block, and an AC molded case circuit breaker group. The first output terminal block and the second output terminal block are respectively disposed on two sides of the air switch group. The first output terminal block is connected to an output terminal of the air switch group. The AC molded case circuit breaker group is located above the air switch group and has two AC output terminals respectively connected to the second output terminal block and an input terminal of the air switch group.

In some embodiments, the AC/DC power distribution assembly further includes an AC input terminal block and an SPD mounting plate. The AC input terminal block is located below the first output terminal block. The SPD mounting plate is disposed on one side of the AC input terminal block and below the air switch group. A DC surge module and an AC surge module are mounted on the SPD mounting plate. The DC surge module has an inlet terminal connected to an output terminal of the DC combiner main loop and an outlet terminal connected to the second output terminal block. The AC surge module has an inlet terminal connected to an output terminal of the AC input terminal block and an outlet terminal connected to an input terminal of the AC molded case circuit breaker group.

In some embodiments, a first partition plate is provided in the power distribution compartment and configured to separate the air switch group from below. The power distribution compartment above the first partition plate is open at a first front end surface of the cabinet body in the first direction. An accommodation space is formed between the air switch group and the first front end surface.

In some embodiments, a video surveillance recorder is provided on the first partition plate.

In some embodiments, an outer side surface of the cabinet body is formed with a stepped portion at a junction between the uninterruptible power supply compartment and the power distribution compartment. The stepped portion is provided with a cable access hole in communication with the power distribution compartment in the height direction of the cabinet body. The cable assembly is connected to the DC combiner main loop and extends out of the cabinet body from the wiring compartment.

In some embodiments, the energy storage integrated control cabinet further includes a mounting bracket disposed in the uninterruptible power supply compartment. the mounting bracket includes an upper frame and a lower frame integrally connected to each other. The upper frame and the lower frame are respectively formed with accommodation spaces. An uninterruptible power supply or an uninterruptible power supply host is located in the accommodation spaces.

In some embodiments, a second front end surface of the upper frame in the first direction is flush with a first front end surface of the cabinet body in the first direction. A third front end surface of the lower frame in the first direction is recessed relative to the first front end surface of the cabinet body to form a mounting position. A control host of the energy storage integrated control cabinet is disposed in the mounting position.

In some embodiments, at least one of the upper frame and the lower frame is connected with bearing guide rails. Each of the bearing guide rails includes a fixed section and a movable section slidably connected to each other. In the first direction, the fixed section is fixed to the cabinet body, the movable section is slidably engaged with the fixed section and fixedly connected to the upper frame or the lower frame, and a front end of at least one movable section is provided with a locking structure configured to engage with the cabinet body to fix the mounting bracket within the uninterruptible power supply compartment.

In some embodiments, the uninterruptible power supply compartment and the power distribution compartment are separated by a second partition plate. A gap is formed between the second partition plate and a bottom of the lower frame. An output cable of the uninterruptible power supply is partially accommodated in the gap.

In some embodiments, the upper frame includes an upper base plate, and the lower frame includes a lower base plate and a top plate configured to support the lower base plate. The upper base plate is provided with a first through hole, and the lower frame is provided with a second through hole penetrating through the lower base plate and the top plate. In the first direction, both the first through hole and the second through hole are proximal to a rear end surface of the cabinet body, and the second through hole is in communication with the gap.

In some embodiments, the lower frame further includes two lower side plates spaced apart along the second direction and two lower limiting plates spaced apart along the first direction. The lower side plates, the lower limiting plates, the top plate and the lower base plate are configured to enclose an accommodation space. The lower side plates and upper side plates are connected by connecting plates. Two limiting posts are spaced apart along the second direction in the accommodation space of the lower frame. The two limiting posts are fixedly connected to the lower base plate in the height direction of the cabinet body and configured to support the top plate. The two limiting posts are further configured to divide the accommodation space of the lower frame into two parts in the second direction. One uninterruptible power supply is accommodated in each of the two parts.

An energy storage system includes a container body and the energy storage integrated control cabinet described above. The container body is provided with a liquid cooling unit inside. The energy storage integrated control cabinet is disposed in the container body and arranged side by side with the liquid cooling unit in a second direction perpendicular to the first direction.

The AC/DC power distribution assembly of the energy storage integrated control cabinet, integrated with an AC control part and a DC power distribution part, enables space saving in the width direction of a container when assembled inside the container. The DC combiner main loop is disposed on one side of the AC/DC power distribution assembly in the first direction (corresponding to a length direction of the container), further saving space in the width direction inside the container. Thereby, this allows for an improved upper limit of a size design of the liquid cooling unit 300, which in turn facilitates improvement of energy density of batteries inside the container.

### BRIEF DESCRIPTION OF THE DRAWINGS

FIG. 1 is a schematic structural diagram of an energy storage system according to some embodiments of the present application.
FIG. 2 is a schematic three-dimensional structural diagram of an energy storage integrated control cabinet according to some embodiments of the present application.
FIG. 3 is a schematic three-dimensional structural diagram of an energy storage integrated control cabinet from another viewing angle according to some embodiments of the present application.
FIG. 4 is a front view of the energy storage integrated control cabinet of FIG. 2.
FIG. 5 is a partial structural schematic diagram of an energy storage integrated control cabinet with a lower cabinet door hidden according to some embodiments of the present application.
FIG. 6 is a partial enlarged view of part I in FIG. 5.
FIG. 7 is a schematic diagram of a positional relationship between a DC combiner main loop and an AC/DC power distribution assembly in an energy storage integrated control cabinet according to some embodiments of the present application.
FIG. 8 is a schematic structural diagram of a DC combiner main loop of an energy storage integrated control cabinet according to some embodiments of the present application.
FIG. 9 is a schematic structural diagram of the DC combiner main circuit of FIG. 8 from another perspective.
FIG. 10 is a schematic structural diagram of an energy storage integrated control cabinet with an uninterruptible power supply mounted on a mounting bracket and an uninterruptible power supply compartment pulled out according to some embodiments of the present application.
FIG. 11 is a schematic structural diagram of a bearing guide rail.
FIG. 12 is a schematic structural diagram of a mounting bracket according to some embodiments of the present application.
FIG. 13 is a side view of the mounting bracket of FIG. 12.

In the drawings, 1 represents an energy storage system; 100 represents an energy storage integrated control cabinet; 10 represents a cabinet body; 101 represents an engaging mechanism; 102 represents a lower cabinet door; 103 represents a first front end surface; 104 represents an upper cabinet door; 105 represents a gap; 106 represents a rear end surface; 110 represents an uninterruptible power supply compartment; 120 represents a power distribution compartment; 121 represents a first partition plate; 122 represents a video surveillance recorder; 123 represents a second partition plate; 130 represents a wiring compartment; 140 represents a stepped portion; 141 represents a cable access hole; 20 represents an AC/DC power distribution assembly; 210 represents an air switch group; 220 represents a first output terminal block; 230 represents a second output terminal block; 240 represents an AC molded case circuit breaker group; 241 represents a first AC output terminal; 242 represents a second AC output terminal; 250 represents an SPD mounting plate; 251 represents a DC surge module; 252 represents a AC surge module; 260 represents an AC input terminal block; 30 represents a DC combiner main loop; 310 represents a branch loop assembly; 311 represents a circuit breaker assembly; 3111 represents an upper DC fuse; 3112 represents a lower DC fuse; 312 represents a negative input copper busbar; 313 represents a positive input copper busbar; 314 represents a negative output copper busbar; 315 represents a positive output copper busbar; 40 represents a cable assembly; 50 represents a mounting bracket; 510 represents an upper frame; 511 represents a second front end surface; 512 represents an upper base plate; 513 represents a first through hole; 514 represents an upper side plate; 515 represents an upper limiting plate; 520 represents a lower frame; 521 represents a third front end surface; 522 represents a lower base plate; 523 represents a top plate; 524 represents a second through hole; 525 represents a lower side plate; 526 represents a lower limiting plate; 527 represents a limiting post; 530 represents an accommodation space; 540 represents a bearing guide rail; 541 represents a fixed section; 542 represents a movable section; 543 represents a locking structure; 550 represents a connecting plate; 60 represents an uninterruptible power supply; 70 represents an uninterruptible power supply host; 80 represents a control host; 200 represents a container body; and 300 represents a liquid cooling unit.

### DETAILED DESCRIPTION

In order to make the above objects, features, and advantages of the present application more obvious and understandable, specific embodiments of the present application will be described in detail below with reference to the accompanying drawings. In the following description, many specific details are set forth in order to fully understand the present application. However, the present application can be implemented in many other ways different from those described herein, and those skilled in the art can make similar improvements without violating the connotation of the present application. Therefore, the present application is not limited by the specific embodiments disclosed below.

In the description of the present application, it should be understood that if these terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like present, orientations or position relationships indicated by these terms are based on orientations or position relationships shown in the drawings, which are merely for convenience in describing the present application and simplifying the description, and not intended to indicate or imply that a referred device or element must have a specific orientation, or be constructed and operated in a specific orientation, and therefore cannot be construed as a limitation to the present application.

Moreover, terms such as "first" and "second" are used for descriptive purposes only, which shall not be construed as indicating or implying relative importance or implicitly indicating the number of the indicated technical features. Therefore, a feature defined by "first" or "second" may include at least one of that feature either explicitly or implicitly. In the description of present application, "a plurality of" means at least two, such as two, three, etc., unless otherwise expressly defined.

In existing container-type energy storage systems, one design is that battery packs are arranged along height and length directions of the container body, while a direct current (DC) combiner cabinet, an alternate current (AC) power distribution cabinet, and a liquid cooling unit are arranged side by side along a width direction of the container body at an entrance of the container.

While increasing energy density of batteries remains a key industry objective, such increasing necessitates corresponding size enlargement of the liquid cooling unit to ensure heat dissipation effect. However, within a related container of fixed specifications, available internal space is limited. The size design of a liquid cooling unit is affected by an arrangement of a DC combiner cabinet, an AC power distribution cabinet and a liquid cooling unit, and thus improvement of a energy density of batteries in the container is limited.

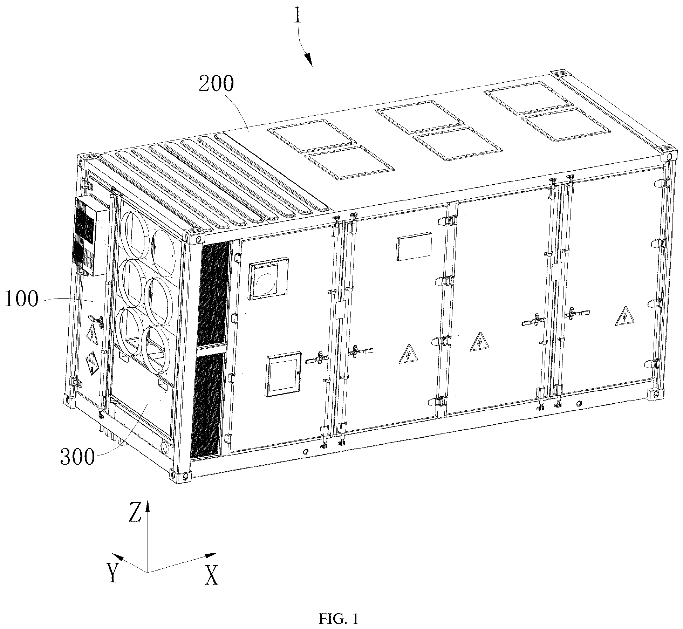

The present application provides an energy storage integrated control cabinet 100 and an energy storage system 1 including the energy storage integrated control cabinet 100. As shown in FIG. 1, the energy storage system 1 includes the energy storage integrated control cabinet 100 and a container body 200. The energy storage integrated control cabinet 100 is disposed in the container body 200.

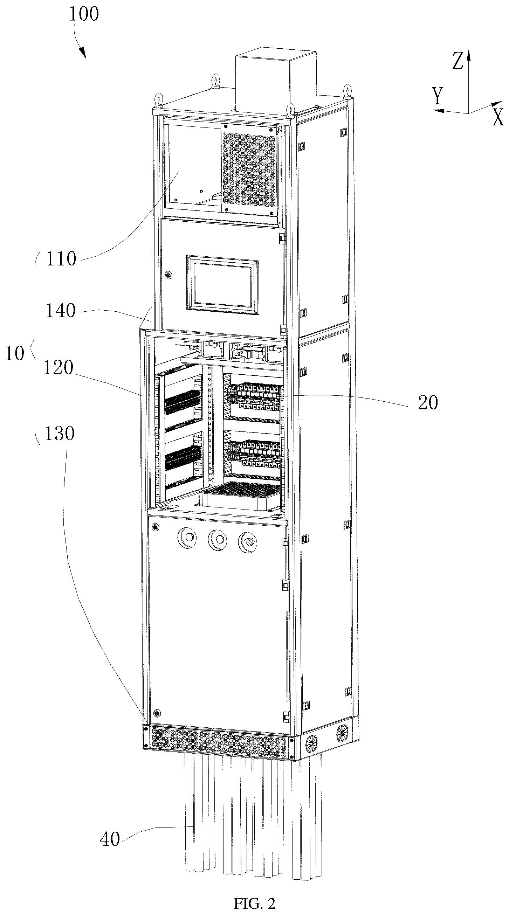

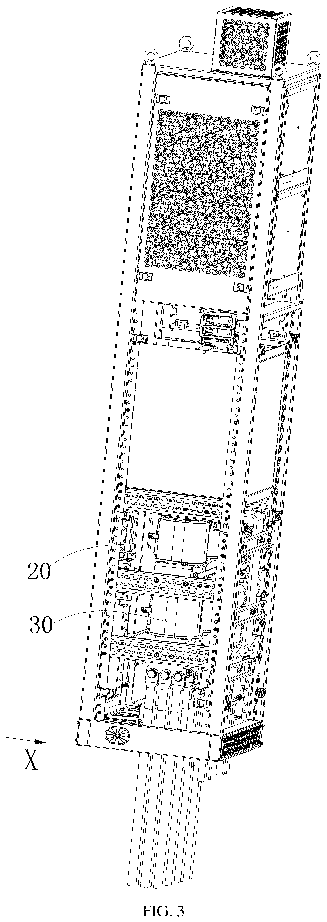

Referring to FIG. 2 to FIG. 7, the energy storage integrated control cabinet 100 according to the present application includes a cabinet body 10, an alternating current/direct current (AC/DC) power distribution assembly 20, a direct current (DC) combiner main loop 30, and a cable assembly 40. An accommodation space inside the cabinet body 10 includes an uninterruptible power supply compartment 110, a distribution compartment 120, and a wiring compartment 130 from top to bottom along a height direction of the cabinet body 10. The AC/DC power distribution assembly 20 is disposed in the power distribution compartment 120. The DC combiner main loop 30 is disposed in the power distribution compartment 120 and located on one side of the AC/DC power distribution assembly 20 in a first direction X. The first direction X is perpendicular to the height direction Z. The cable assembly 40 is connected to the DC combiner main circuit 30 and extends out of the cabinet body 10 from the wiring compartment 130.

In the present application, the first direction X may be specifically defined as a length direction of the cabinet body 10. The second direction Y may be specifically defined as a width direction of the cabinet body 10. As shown in FIG. 1, when the energy storage integrated control cabinet 100 is disposed in the container body 200, the first direction X may be corresponding to a length direction of the container body 200, and the second direction Y may be corresponding to a width direction of the container body 200. The energy storage integrated control cabinet 100 is located at an entrance of the container body 200 in the length direction of the container body 200. The energy storage integrated control cabinet 100 and the liquid cooling unit 300 are arranged side by side in the width direction of the container body 200.

The accommodation space inside the cabinet body 10 is divided from top to bottom into the uninterruptible power supply compartment 110, the power distribution compartment 120 and the wiring compartment 130 from top to bottom. The compartments may be separated by partition plates. The uninterruptible power supply compartment 110 may be configured to accommodate an uninterruptible power supply.

The DC combiner main loop 30 may be configured to connect high-voltage boxes of battery clusters inside the container body 200, and subsequently output DC power to an energy storage converter through the AC/DC power distribution assembly 20.

The AC/DC power distribution assembly 20 may be further configured to output alternating current (AC) power, and may be electrically connected to an external power source as well as electrical equipment inside the container body 200. The electrical equipment inside the container body 200 may include, for example, lighting equipment, various sockets, and the liquid cooling unit 300. It should be understood that the AC/DC power distribution assembly 20 may include an AC control part and a DC power distribution part. The AC control part may be electrically connected to the external power source and the electrical equipment inside the container body 200. The DC power distribution part may be electrically connected to the energy storage converter.

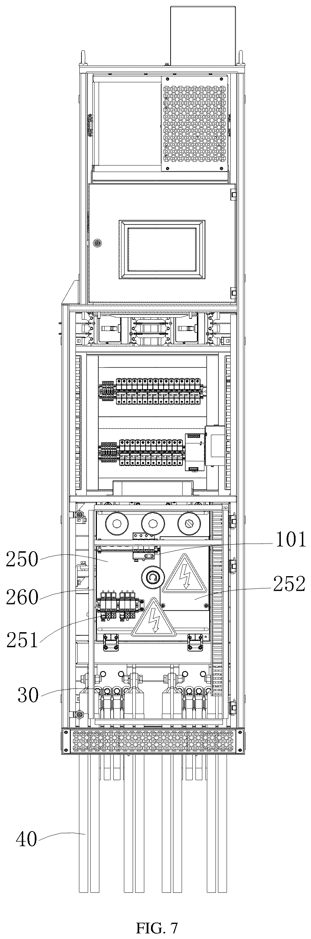

The above energy storage integrated control cabinet 100, integrated with both the AC control part and the DC power distribution part, enables space saving in a width direction of a container when assembled inside the container. Referring to FIG. 7, the DC combiner main loop 30 is disposed on one side of the AC/DC power distribution assembly 20 in the first direction X, further saving space inside in the width direction of the container. Thereby, this allows for an improved upper limit of a size design of the liquid cooling unit 300, which in turn facilitates improvement of energy density of batteries inside the container.

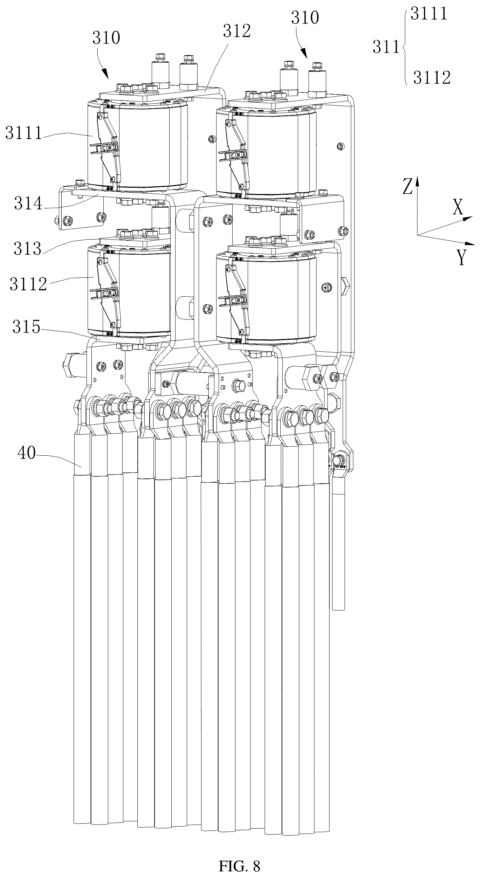

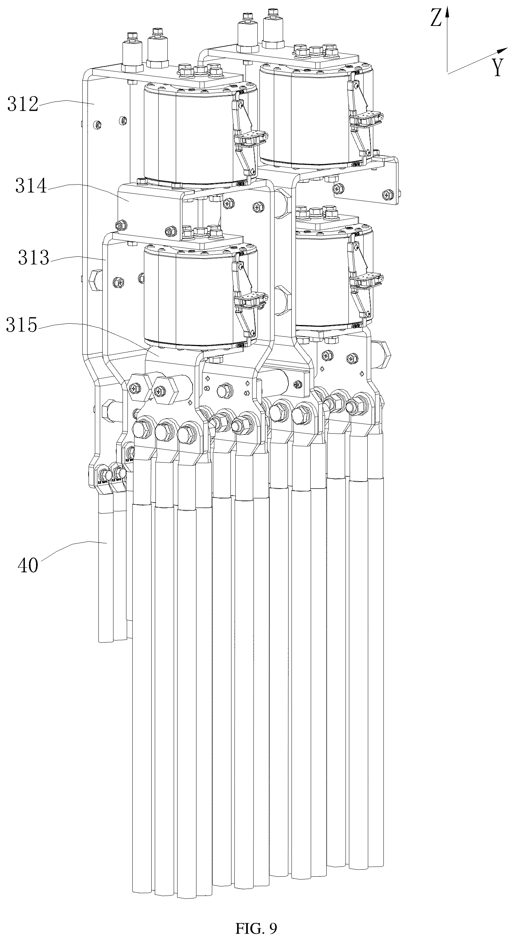

In some embodiments, referring to FIG. 8 and FIG. 9, the DC combiner main loop 30 may include two branch loop assemblies 310 arranged in the second direction Y. Any two of he second direction Y, the first direction X and the height direction Z of the cabinet body 10 may be perpendicular to each other. Each of the two branch loop assemblies 310 may include a circuit breaker assembly 311. In each branch loop assembly 310, the circuit breaker assembly 311 may have a negative input copper busbar 312 and a positive input copper busbar 313 both arranged in the first direction X, and a negative output copper busbar 314 and a positive output copper busbar 315 both arranged in the second direction Y.

As described above, the DC combiner main loop 30 may be configured to connect the high-voltage boxes of the battery clusters inside the container body 200, and subsequently output the DC power to the energy storage converter through the AC/DC power distribution assembly 20. Generally, at least two high-voltage boxes may be provided inside the container body 200. The high-voltage boxes are core components in the energy storage system 1. The high-voltage boxes have functions extending beyond power management and distribution to include system safety protection, battery management, and various testing capabilities, ensuring efficient, stable, and safe operation of the energy storage system 1.

In this embodiment, the DC combiner main loop 30 may be configured to be electrically connected to the two high-voltage boxes. For this purpose, as shown in FIG. 8 and FIG. 9, the DC combiner main loop 30 may include two branch loop assemblies 310. Each of the two branch loop assemblies 310 may be configured to be electrically connected to a positive electrode and a negative electrode of a high-voltage box, and to the energy storage converter. Specifically, the circuit breaker assembly 311 of the branch circuit assembly 310 may include a negative input copper busbar 312, a positive input copper busbar 313, a negative output copper busbar 314, and a positive output copper busbar 315. The negative input copper busbar 312 may be configured to be connected to the negative output terminal of the high-voltage box, and the positive input copper busbar 313 may be configured to be celectrically onnected to a positive output terminal of the high-voltage box. The negative output copper busbar 314 and the positive output copper busbar 315 are configured to be electrically connected to positive and negative input terminals of the energy storage converter, respectively.

In order to reduce a dimension of the cabinet body 10 in the second direction Y, in this embodiment, the negative input copper busbar 312 and the positive input copper busbar 313 may be arranged in the first direction X, and the negative output copper busbar 314 and the positive output copper busbar 315 may be arranged in the second direction Y. This configuration allows the negative input copper busbar 312 and the positive input copper busbar 313 to utilize a space in the first direction X for arrangement, thereby reducing a size of the cabinet body 10 in the second direction Y.

Furthermore, the branch loop assembly 310 may include an upper DC fuse 3111 and a lower DC fuse 3112 arranged vertically along the height direction Z of the cabinet body 10. A top and a bottom of the upper DC fuse 3111 may be electrically connected to the negative input copper busbar 312 and the negative output copper busbar 314 respectively. A top and a bottom of the lower direct current fuse 3112 may be respectively connected to the positive input copper busbar 313 and the positive output copper busbar 315.

As shown in FIG. 8 and FIG. 9, the upper DC fuse 3111 and the lower DC fuse 3112 may be arranged in a staggered manner along the height direction Z of the cabinet body 10. The negative input copper busbar 312 may be electrically connected to the top of the upper DC fuse 3111, and the positive input copper busbar 313 may be electrically connected to the top of the lower DC fuse 3112. Similarly, the negative output copper busbar 314 may be electrically connected to the bottom of the upper DC fuse 3111, and the positive output copper busbar 315 may be electrically connected to the bottom of the lower DC fuse 3112. The negative output copper busbar 314 and the positive output copper busbar 315 may be both arranged along the second direction Y.

In this embodiment, the upper DC fuse 3111 and the lower DC fuse 3112 are staggered in the height direction Z of the cabinet body 10. This configuration not only enables their connection to the respective busbars but also frees up space for the arrangement of the negative input copper busbar 312 and the negative output copper busbar 314 in the first direction X, as well as for the arrangement of the negative output copper busbar 314 and the positive output copper busbar 315 in the second direction Y.

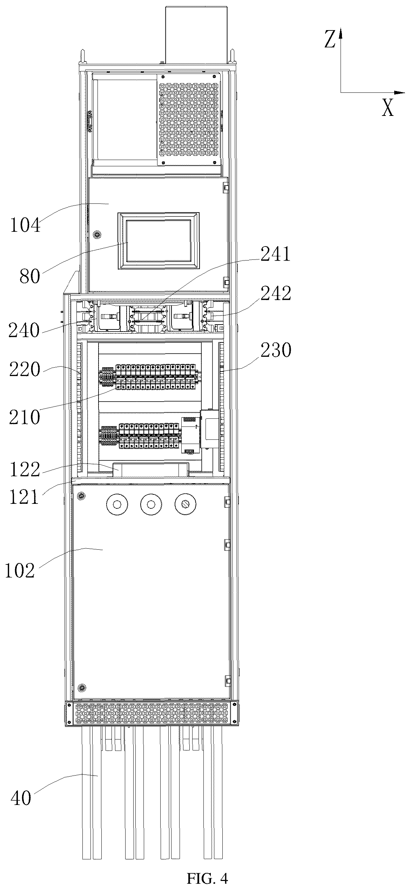

In some embodiments, referring to FIG. 4, the AC/DC power distribution assembly 20 may include an air switch group 210, a first output terminal block 220 and a second output terminal block 230, and an AC molded case circuit breaker group 240. The first output terminal block 220 and the second output terminal block 230 may be disposed on two sides of the air switch group 210, respectively. The first output terminal block 220 may be connected to an output terminal of the air switch group 210. The AC molded case circuit breaker group 240 may be located above the air switch group 210. The AC molded case circuit breaker group 240 may have two AC output terminals including a first AC output terminal 241 and a second AC output terminal 242, which may be respectively connected to an input terminal of the air switch group 210 and the second output terminal block 230.

Specifically, the first output terminal block 220 and the second output terminal block 230 may be located on two sides of the air switch group 210 in the second direction Y. In specific mounting, plastic support brackets may be respectively provided on inner walls of the cabinet body 10 in the second direction Y to fix the first output terminal block 220 and the second output terminal block 230.

The air switch group 210 may include a plurality of air switches configured to transmit output from the AC molded case circuit breaker group 240 to the first output terminal block 220, which subsequently supplies power to electrical equipment inside the container, such as lighting equipment, various sockets, and the liquid cooling unit 300. It is understandable that the specific quantity of air switches may be determined according to the quantity of loaded electrical equipment.

The AC molded case circuit breaker group 240 may include two AC output terminals. That is, output of the AC molded case circuit breaker group 240 may be divided into two paths. One path may be connected to the input terminal of the air switch group 210, and the other path may be connected to the second output terminal block 230, so that power can be transmitted to the liquid cooling unit 300 through the second output terminal block 230. In addition, in the energy storage system 1, the second output terminal block 230 may be disposed on a side of the cabinet body 10 proximal to the liquid cooling unit 300, so that a wiring path between the second output terminal block 230 and the liquid cooling unit 300 may be relatively short.

In this embodiment, the first output terminal block 220 and the AC molded case circuit breaker group 240 may be respectively connected to the air switch group 210 via electrical lines, while the second output terminal block 230 may be connected to the AC molded case circuit breaker group 240 via electrical lines. By arranging the first output terminal block 220, the second output terminal block 230, and the AC molded case circuit breaker group 240 around the air switch group 210, wiring paths for all connections may be relatively short.

In some embodiments, referring to FIG. 4 and FIG. 7, the AC/DC power distribution assembly 20 may further include an AC input terminal block 260 and a surge protection device (SPD) mounting plate. The AC input terminal block 260 may be located below the first output terminal block 220. The SPD mounting plate 250 may be disposed on one side of the AC input terminal block 260 and below the air switch group 210. A DC surge module 251 and an AC surge module 252 may be mounted on the SPD mounting plate 250. The DC surge module 251 may have an inlet terminal connected to an output terminal of the DC combiner main loop 30 and an outlet terminal connected to the second output terminal block 230. The AC surge module 252 may have an inlet terminal connected to an output terminal of the AC input terminal block 260 and an outlet terminal connected to an input terminal of the AC molded case circuit breaker group 240.

The AC input terminal block 260 may be specifically disposed on the same side of the cabinet body 10 as the first output terminal block 220. The AC input terminal block 260 may be configured to receive an external 220V power supply. Each of the DC surge module 251 and the AC surge module 252 may be mounted on the SPD mounting plate 250, allowing the DC surge module 251 and the AC surge module 252 to be removed together with the SPD mounting plate 250 to facilitate maintenance. The DC combiner main loop 30 may be specifically disposed on one side of the SPD mounting plate 250 in the first direction X.

Furthermore, the SPD mounting plate 250 may have a lower end rotatably connected to the cabinet body 10 and an upper end detachably connected to the cabinet body 10.

Specifically, the lower end of the SPD mounting plate 250 may be rotatably connected to the cabinet body 10 through, for example, a pivot, a hinge connection, or the like. In this way, the SPD mounting plate 250 may rotate about its lower end as a rotational axis.

The upper end of the SPD mounting plate 250 may be provided with a matching portion, which is matched with an engaging mechanism 101 on the cabinet body 10. The specific form of the engaging mechanism 101 is not limited, as long as the SPD mounting plate 250 can be locked or released. For example, the engaging mechanism 101 may include a rotatable locking block. When the SPD mounting plate 250 is rotated to be parallel to the height direction Z, the locking block can be moved to a position blocking the SPD mounting plate 250.

In this embodiment, the SPD mounting plate 250 may be flip-mountable, thereby facilitating maintenance of the components thereon. When maintenance is required, the SPD mounting plate 250 may be flipped outward from the cabinet body 10, so that the DC surge module 251, the AC surge module 252, and other components can be moved to outside of the cabinet body 10, thereby increasing operational space and facilitating maintenance.

Furthermore, as shown in FIG. 4 and FIG. 7, the power distribution compartment 120 of the cabinet body 10 is provided with a lower cabinet door 102 at a position corresponding to the SPD mounting plate 250, and is open at a position corresponding to the air switch group 210. The lower cabinet door 102 is capable to protect the SPD mounting plate 250 and devices mounted thereon, and the open configuration at the position corresponding to the air switch group 210 is convenient to operate the air switch group 210. In this way, the structure of the cabinet body 10 is simplified, and cost of the cabinet body 10 can also be reduced.

In some embodiments, referring to FIG. 2, FIG. 7 and FIG. 10, a first partition plate 121 may be disposed in the power distribution compartment 120 and configured to separate the air switch group 210 from below. The power distribution compartment 120 above the first partition plate 121 may be open at a first front end surface 103 of the cabinet body 10 in the first direction X. An accommodation space may be formed between the air switch group 210 and the first front end surface 103.

The air switch group 210 may be separated from components below such as the SPD mounting plate 250 by the first partition plate 121, so that the electrical distribution compartment 120 may be divided into a first compartment and a second compartment in the height direction Z. The first compartment is configured to accommodate the air switch group 210, the first output terminal block 220, the second output terminal block 230, and the AC molded case circuit breaker group 240, and the second compartment is configured to accommodate the AC input terminal block 260, the SPD mounting plate 250, and the like.

In this embodiment, the first front end surface 103 of the cabinet body 10 may refer to a side surface of the cabinet body 10 facing the outside when the energy storage integrated control cabinet is placed into the container body 200. The first compartment may be open at the first front end surface 103, and an accommodation space may be formed between the first front end surface 103 and the air switch group 210. The accommodation space is configured to accommodate other equipment inside the container, so that the size of the container in its length direction is reduced.

For example, the accommodation space may be configured to accommodate a fire alarm control panel (i.e., FACP). In the container body 200, space occupied by the energy storage integrated control cabinet 100 and the liquid cooling unit 300 may be generally constructed as an electrical compartment of the containerized energy storage system 1. The electrical compartment may be provided with a compartment door, and the FACP for monitoring fire alarm information in the compartment is mounted on an inner side of the compartment door. The compartment door may be positioned proximal to the first front end surface 103 of the cabinet body 10 when closed, allowing the FACP to be at least partially accommodated in the above-mentioned accommodation space, thereby reducing the size of the container in its length direction.

Furthermore, referring to FIG. 4, a video surveillance recorder may be provided on the first partition plate 121. The video surveillance recorder 122 may be accommodated in the above-mentioned accommodation space, and supported by the first partition plate 121. In this way, the space in the height direction Z is fully utilized without requiring additional support structures.

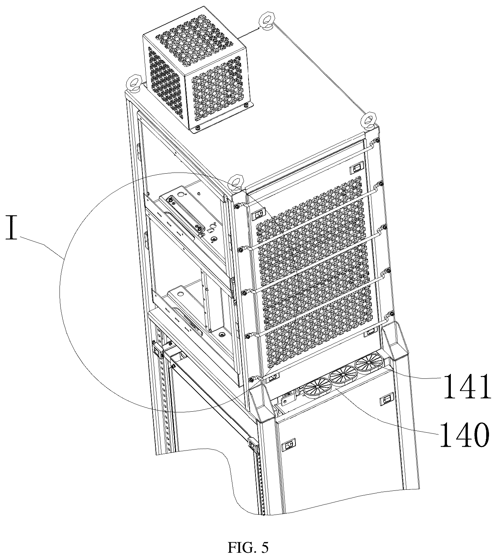

In some embodiments, referring to FIG. 2 and FIG. 5, an outer side surface of the cabinet body 10 may be formed with a stepped portion 140 at a junction between the uninterruptible power supply compartment 110 and the power distribution compartment 120. The stepped portion 140 may be provided with a cable access hole 141 in communication with the power distribution compartment 120 in the height direction Z of the cabinet body 10.

The cable access hole 141 may extend through the stepped portion 140 in the height direction Z and may be in communication with the first compartment of the power distribution compartment 120. One or more such cable access holes 141 may be provided. With this configuration, power cables of external electric equipment can enter through the cable access hole 141 and subsequently be electrically connected to the first output terminal block 220, thereby avoiding interference with the placement of components inside the uninterruptible power supply compartment 110. Furthermore, the stepped portion 140 may be provided with a plurality of reinforcing ribs to enhance the strength of the cabinet body 10.

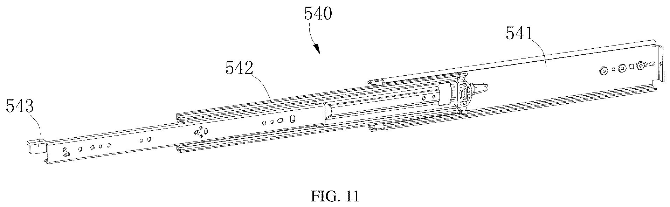

In some embodiments, referring to FIG. 5, FIG. 6 and FIG. 10 to FIG. 13, the energy storage integrated control cabinet 100 may further include a mounting bracket 50. The mounting bracket 50 may be disposed in the uninterruptible power supply compartment 110, and configured to support an uninterruptible power supply 60. The mounting bracket 50 may include an upper frame 510 and a lower frame 520 integrally connected to each other. The upper frame 510 and the lower frame 520 may have accommodation spaces 530 inside, respectively. The uninterruptible power supply 60 or an uninterruptible power supply host 70 may be disposed in the accommodation spaces 530.

The accommodation spaces 530 of the upper frame 510 and the lower frame 520 may be configured to accommodate one or more uninterruptible power supplies 60 or accommodate the uninterruptible power supply host 70, respectively. In this embodiment, uninterruptible power supplies 60 or uninterruptible power supply hosts 70 may be arranged side by side along the second direction Y in the accommodation space 530 of the upper frame 510, and two uninterruptible power supplies 60 may be arranged side by side in the accommodation space 530 of the lower frame 520. The second direction Y may be perpendicular to the first direction X. Any two of the second direction Y, the first direction X, and the height direction Z of the cabinet body 10 may be perpendicular to each other.

In this embodiment, two layers of placement positions in the height direction Z of the cabinet body 10 may be formed on the mounting bracket 50, so that the uninterruptible power supplies 60 or the uninterruptible power supply hosts 70 can be stacked in the height direction, thereby fully utilizing the space in the height direction Z.

Furthermore, referring to FIG. 2, FIG. 10 and FIG. 13, the second front end surface 511 of the upper frame 510 in the first direction X may be flush with the first front end surface 103 of the cabinet body 10 in the first direction X. A third front end surface 521 of the lower frame 520 may be recessed relative to the first front end surface 103 of the cabinet body 10 to form a mounting position. A control host 80 of the energy storage integrated control cabinet 100 may be disposed in the mounting position.

In addition, after the mounting bracket 50 is mounted in the uninterruptible power supply compartment 110, the second front end surface 511 of the upper frame 510 in the first direction X may be flush with the first front end surface 103 of the cabinet body 10, and the third front end surface 521 of the lower frame 520 may be recessed relative to the first front end surface 103 of the cabinet body 10 to form the mounting position. The mounting position may be regarded as a mounting space configured to accommodate the control host 80 of the energy storage integrated control cabinet 100.

In this embodiment, by arranging the front end surfaces of the mounting bracket 50 in a staggered manner from top to bottom, space may be freed up in the energy storage integrated control cabinet 100, allowing the control host 80 to be mounted on an upper cabinet door 104 enclosing the uninterruptible power supply compartment 110. This configuration achieves the purpose of optimizing the spatial dimension in the length direction of the cabinet body 10, thereby contributing to space saving in the length direction of the container body 200. In addition, after the uninterruptible power supply compartment 110 is enclosed by the upper cabinet door 104, the front side of the upper cabinet door 104 can maintain a flush and uniform appearance.

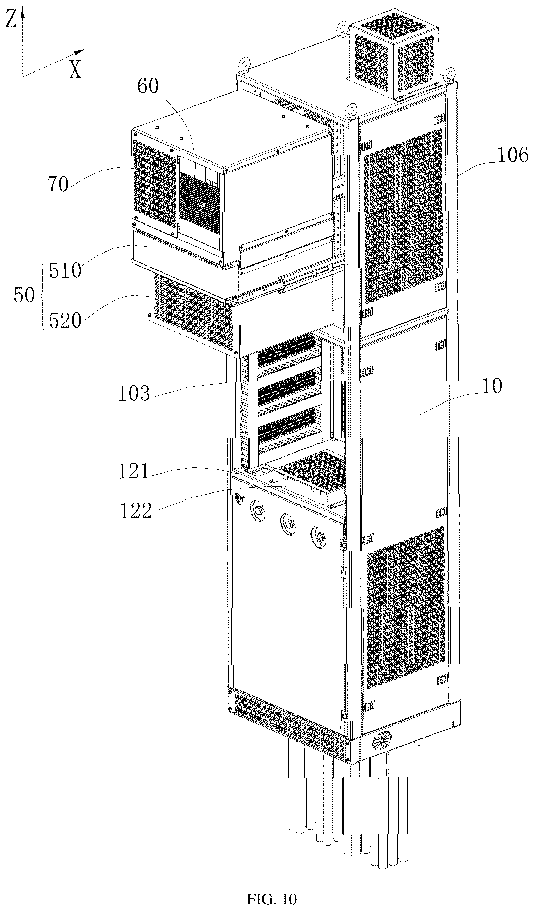

In some embodiments, referring to FIG. 10 to FIG. 12, at least one of the upper frame 510 and the lower frame 520 may be connected with bearing guide rails 540. Each of the bearing guide rails 540 may include a fixed section 541 and a movable section 542 slidably connected to each other. In the first direction X, the fixed section 541 may be fixed to the cabinet body 10, and the movable section 542 may be slidably engaged with the fixed section 541 and fixedly connected with the upper frame 510 or the lower frame 520. A front end of at least one movable section 542 may be provided with a locking structure 543 configured to engage with the cabinet body 10 to fix the mounting bracket 50 within the uninterruptible power supply compartment 110.

Specifically, in this embodiment, two sides of the lower frame 520 in the second direction Y may be provided with the bearing guide rails 540. The fixed section 541 of each of the bearing guide rails 540 may be fixedly connected to an inner wall of the cabinet body 10. The movable section 542 may be slidably engaged with the fixed section 541. With this configuration, the mounting bracket 50 can be supported in the cabinet body 10 through the bearing guide rail 540 and slidable relative to the cabinet body 10 along the first direction X.

When the mounting bracket 50 is accommodated in the UPS compartment 110, the locking structure 543 may be engaged with the cabinet body 10 to fix the mounting bracket 50 inside the uninterruptible power supply compartment 110. With this configuration, when inspection or maintenance of the uninterruptible power supply 60 is required, the entire mounting bracket 50 can be pulled outward simply by releasing the engagement between the locking structure 543 and the cabinet body 10.

Alternatively, at least one movable section 542 may be provided. For example, two movable sections 542, including one connected to the fixed section 541 and the other provided with the above-mentioned locking structure 543, may be provided. The two movable sections 542 may be slidably engaged with each other. This configuration increases the extension distance when the mounting bracket 50 is pulled out for accessing the uninterruptible power supply 60.

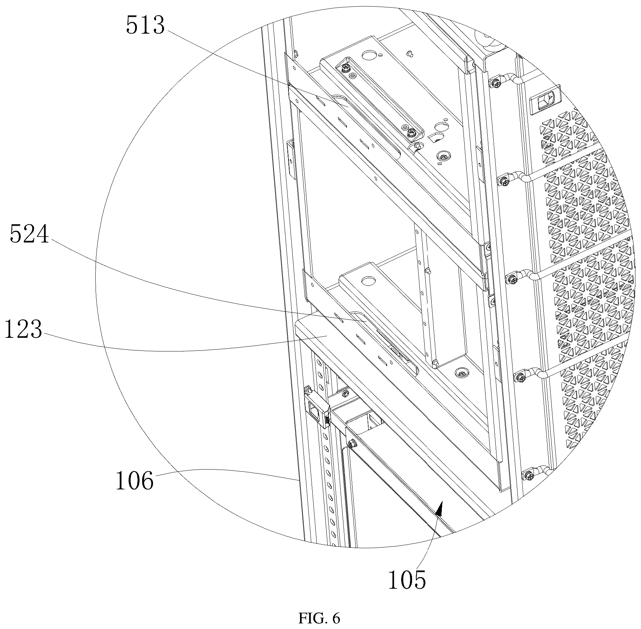

In some embodiments, as shown in FIG. 5 and FIG. 6, the uninterruptible power supply compartment 110 and the power distribution compartment 120 may be separated by a second partition plate 123. A gap 105 may be formed between the second partition plate 123 and a bottom of the lower frame 520. An output cable (not shown) of the uninterruptible power supply host 70 may be partially accommodated in the gap 105.

The output cable of the UPS host 70 may be connected to the air switch group 210. In this embodiment, the gap 105 between the second partition plate 123 and the bottom of the lower frame 520 may accommodate the output cable, so that the output cable has enough space to be connected from the uninterruptible power supply 60 to the air switch group 210. The second partition plate 123 may be provided with a hollow portion, allowing the output cable to extend into the power distribution compartment 120.

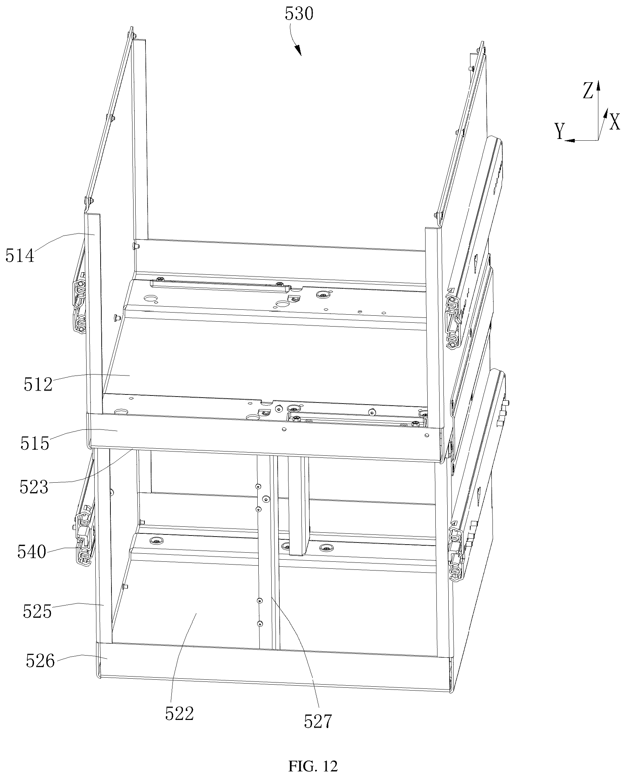

In some embodiments, referring to FIG. 6 and FIG. 12, the upper frame 510 may include an upper base plate 512, and the lower frame 520 may include a lower base plate 522 and a top plate 523. The upper base plate 512 may be provided with a first through hole 513. The top plate 523 may be configured to support the lower base plate 522. The lower frame 520 may be provided with a second through hole 524 penetrating through the lower base plate 522 and the top plate 523. In the first direction X, both the first through hole 513 and the second through hole 524 may be proximal to a rear end surface 106 of the cabinet body 10, and the second through hole 524 may be in communication with the gap 105.

In this embodiment, by providing the first through hole 513 and the second through hole 524 on the upper base plate 512 and the lower base plate 522 respectively, the output cable of the uninterruptible power supply 60 can be conveniently led out downward.

Specifically, referring to FIG. 6 and FIG. 12, both the upper base plate 512 and the lower base plate 522 may be configured to support the uninterruptible power supply 60 in the height direction Z. The top plate 523 may be located below the upper base plate 512. In the first direction X, each of the first through hole 513 and the second through hole 524 is proximal to the rear end surface 106 of the cabinet body 10. Since the output cable (not shown) of the uninterruptible power supply 60 is led out from a rear end of the uninterruptible power supply 60, the output cable of the uninterruptible power supply 60 extends downward in the height direction Z, sequentially passes through the first through hole 513 and the second through hole 524, and then enters the gap 105 before finally reaching the power distribution compartment 120.

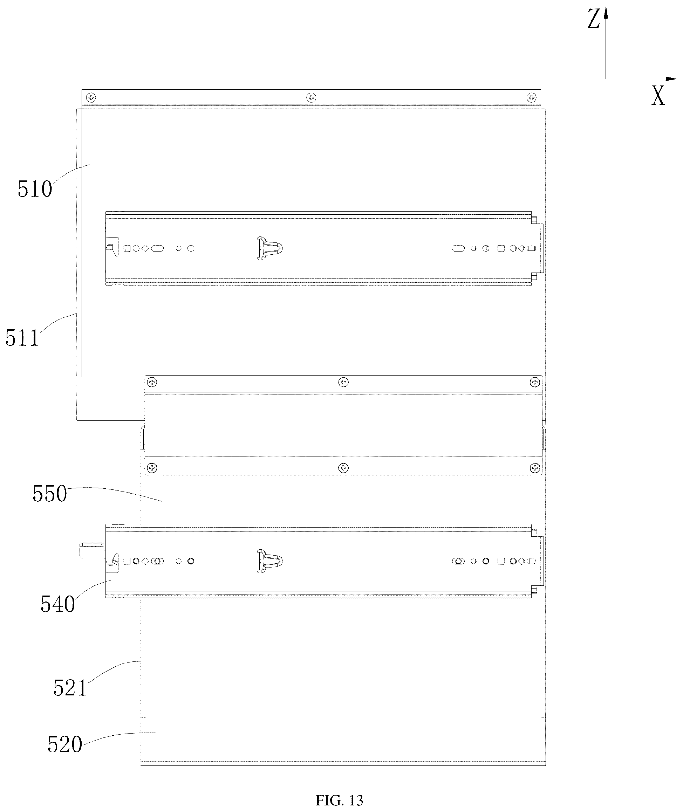

In some embodiments, referring to FIG. 12 and FIG. 13, the upper frame 510 may further include two upper side plates 514 spaced apart along the second direction Y and two upper limiting plates 515 spaced apart along the first direction X. Both the upper side plates 514 and the upper limiting plates 515 may be connected to the upper base plate 512 and enclose a top-open accommodation space 530. In the height direction of the cabinet body 10, a height of each of the upper limiting plates 515 may be less than that of each of the upper side plates 514.

In this embodiment, the accommodation space 530 formed by the upper frame 510 is open at the top, which facilitates mounting and maintenance operations of the uninterruptible power supply 60 and the uninterruptible power supply host 70. Specifically, during mounting or maintenance, after the mounting bracket 50 is pulled out of the uninterruptible power supply compartment 110, operations can be performed from above. Alternatively, a detachable cover plate (not labeled) may be provided at the top of the upper frame 510. The cover plate may be specifically assembled on the two upper side plates 514.

In addition, since the height of each of the upper limiting plates 515 is less than that of each of the upper side plates 514, it may be ensured that when the uninterruptible power supply host 70 is mounted into the upper frame 510, a cable interface at the rear of the uninterruptible power supply host 70 remains exposed, thereby facilitating connection to output cables.

In some embodiments, referring to FIG. 12 and FIG. 13, the lower frame 520 may further include two lower side plates 525 spaced apart along the second direction Y and two lower limiting plates 526 spaced apart along the first direction X. The lower side plates 525, the lower limiting plates 526, the top plate 523, and the lower base plate 522 may enclose an accommodation space 530. The lower side plates 525 and the upper side plates 514 may be connected by connecting plates 550.

The two lower limiting plates 526 may be configured to limit movement of the lower frame 520 in the first direction X, and the two lower side plates 525 may be configured to limit movement of the lower frame 520 in the second direction Y. The lower side plates 525 and the upper side plate 514 may be connected through the connecting plates 550, so that the upper frame 510 and the lower frame 520 are integrally connected, and thus can slide together.

Furthermore, two limiting posts 527 spaced apart along the second direction Y may be disposed in the accommodation space 530 of the lower frame 520. The limiting posts 527 may be fixedly connected to the lower base plate 522 in the height direction Z and configured to support the top plate 523. The two limiting posts 527 may be further configured to divide the accommodation space 530 of the lower frame 520 into two parts in the second direction Y. Each of the two parts may be configured as a placing position to accommodate one uninterruptible power supply 60. The limiting posts and the lower side plates 525 together may be configured to limit movement of the uninterruptible power supply 60 from two sides of the uninterruptible power supply 60.

With this configuration, the lower frame 520 exhibits enhanced strength and provides improved support for the upper frame 510. Moreover, the two uninterruptible power supplies 60 in the lower frame 520 are independently limited in the second direction Y.

As shown in FIG. 1, the present application further provides an energy storage system 1. The energy storage system 1 includes a container body 200 and the above-mentioned energy storage integrated control cabinet 100. The container body 200 is provided with a liquid cooling unit 300. The energy storage integrated control cabinet 100 is disposed in the container body 200 and arranged side by side with the liquid cooling unit 300 in a second direction Y perpendicular to the first direction X.

Specifically, the first direction X corresponds to the length direction of the container body 200, and the second direction Y corresponds to the width direction of the container body 200. The energy storage integrated control cabinet 100, integrated with the AC control part and the DC power distribution part, can satisfy electrical control requirements. In the present application, the energy storage integrated control cabinet 100 is arranged side by side with the liquid cooling unit 300 along the second direction Y in the container body 200, and thus space in the width direction in the container body is saved compared to a conventional design where a DC combiner cabinet and an AC power distribution cabinet are arranged separately. In addition, the DC combiner main loop 30 is located on one side of the AC/DC power distribution assembly 20 in the first direction X, resulting in a compact dimension of the energy storage integrated control cabinet 100 in its width direction, which further saves space in the width direction of the container. Thereby, this allows for an improved upper limit of a size design of the liquid cooling unit 300, which in turn facilitates improvement of energy density of batteries inside the container.

In the present application, unless clearly defined or specified otherwise, terms such as "mount", "connect", "attach", and "fix" used in the description are intended to have meanings commonly understood in a broad sense. For example, "connection" may refer to a fixed connection, or a detachable connection, or an integral connection; or may refer to a mechanical connection, or an electrical connection; or a direct connection, or an indirect connection achieved through an intermedium, or an internal communication between two components, or interactive relationship between two components. The meanings of the terms used herein may be understood by those skilled in the art in accordance with specific situations.

In the present application, unless otherwise expressly specified and defined, a first feature "above" or "below" a second feature means that the first feature may be in direct contact with the second feature, or the first feature and the second feature may be in indirect contact through an intermediate medium. Moreover, the first feature is "on", "above", or "over" the second feature, it may mean that the first feature is directly above or obliquely above the second feature, or it just means that the first feature is higher in level than the second feature. The first feature is "below", "beneath", or "under" the second feature, it may mean that the first feature is directly below or obliquely below the second feature, or it just means that the first feature is lower in level than the second feature.

It should be noted that when a component is referred to as being "fixed to" or "provided on" another component, the component may be directly on the other component or an intermediate component may also exist. When a component is considered as being "connected to" another component, the component may be directly connected to the other component or an intermediate component may also exist at the same time. Terms such as "vertical", "horizontal", "upper", "lower", "left", "right" and other similar expressions used in the description of the present application are only for the purpose of illustration and do not represent the unique implementation.

The technical features in the above embodiments may be randomly combined. For concise description, not all possible combinations of the technical features in the embodiments are described. However, all the combinations of the technical features are to be considered as falling within the scope described in this specification provided that they do not conflict with each other.

The above embodiments only illustrate several implementations of the present application, and the description thereof is specific and detailed, but cannot therefore be understood as limiting the protection scope of the present application. It should be noted that those of ordinary skill in the art may further make variations and improvements without departing from the conception of the present application, and these all fall within the protection scope of the present application. Therefore, the protection scope of the present application should be subject to the appended claims.

## Claims

1. An energy storage integrated control cabinet (100), comprising a cabinet body (10), an AC/DC power distribution assembly (20), a DC combiner main loop (30), and a cable assembly (40);
wherein an accommodation space inside the cabinet body comprises an uninterruptible power supply compartment (110), a power distribution compartment (120) and a wiring compartment (130) from top to bottom along a height direction of the cabinet body (10);
the AC/DC power distribution assembly (20) is disposed in the power distribution compartment (120); and
the DC combiner main loop (30) is disposed in the power distribution compartment (120) and located on one side of the AC/DC power distribution assembly (20) in a first direction perpendicular to the height direction of the cabinet body (10).

2. The energy storage integrated control cabinet (100) of claim 1, wherein the DC combiner main loop (30) comprises two branch loop assemblies (310) arranged in a second direction, and any two of the second direction, the first direction and the height direction of the cabinet body are perpendicular to each other; and
each of the two branch loop assemblies (310) comprises a circuit breaker assembly (311), and the circuit breaker assembly (311) has a negative input copper busbar (312) and a positive input copper busbar (313) both arranged in the first direction, and a negative output copper busbar (314) and a positive output copper busbar (315) both arranged in the second direction.

3. The energy storage integrated control cabinet (100) of claim 2, wherein each of the branch loop assemblies (310) comprises an upper DC fuse (3111) and a lower DC fuse (3112) arranged vertically along the height direction of the cabinet body (10), a top and a bottom of the upper DC fuse (3111) are respectively connected to the negative input copper busbar (312) and the negative output copper busbar (314), and a top and a bottom of the lower DC fuse (3112) are respectively connected to the positive input copper busbar (313) and the positive output copper busbar (315).

4. The energy storage integrated control cabinet (100) of claim 1, wherein the AC/DC power distribution assembly (20) comprises an air switch group (210), a first output terminal block (220) and a second output terminal block (230), and an AC molded case circuit breaker group (240),
wherein the first output terminal block (220) and the second output terminal block (230) are respectively disposed on two sides of the air switch group (210), the first output terminal block (220) is connected to an output terminal of the air switch group (210); and
the AC molded case circuit breaker group (240) is located above the air switch group (210) and has two AC output terminals (241, 242) respectively connected to the second output terminal block (230) and an input terminal of the air switch group (210).

5. The energy storage integrated control cabinet (100) of claim 4, wherein the AC/DC power distribution assembly (20) further comprises an AC input terminal block (260) and an SPD mounting plate (250),
wherein the AC input terminal block (260) is located below the first output terminal block (220);
the SPD mounting plate (260) is disposed on one side of the AC input terminal block (260) and below the air switch group (210), a DC surge module (251) and an AC surge module (252) are mounted on the SPD mounting plate (260), the DC surge module (251) has an inlet terminal connected to an output terminal of the DC combiner main loop (30) and an outlet terminal connected to the second output terminal block (230); and the AC surge module (252) has an inlet terminal connected to an output terminal of the AC input terminal block (260) and an outlet terminal connected to an input terminal of the AC molded case circuit breaker group (240).

6. The energy storage integrated control cabinet (100) of claim 4, wherein a first partition plate (121) is provided in the power distribution compartment (240) and configured to separate the air switch group (210) from below; the power distribution compartment (240) above the first partition plate (121) is open at a first front end surface (103) of the cabinet body (10) in the first direction; and an accommodation space is formed between the air switch group (210) and the first front end surface (103).

7. The energy storage integrated control cabinet (100) of claim 6, wherein a video surveillance recorder (122) is provided on the first partition plate (121).

8. The energy storage integrated control cabinet (100) of claim 1, wherein an outer side surface of the cabinet body (10) is formed with a stepped portion (140) at a junction between the uninterruptible power supply compartment and the power distribution compartment, and the stepped portion is provided with a cable access hole (141) in communication with the power distribution compartment (120) in the height direction of the cabinet body (10);
the cable assembly (40) is connected to the DC combiner main loop (30) and extends out of the cabinet body (10) from the wiring compartment (130).

9. The energy storage integrated control cabinet (100) of claim 1, wherein the energy storage integrated control cabinet (100) further comprises a mounting bracket (50) disposed in the uninterruptible power supply compartment (110), the mounting bracket (50) comprises an upper frame (510) and a lower frame (520) integrally connected to each other, and the upper frame (510) and the lower frame (520) are respectively formed with accommodation spaces, an uninterruptible power supply (110) or an uninterruptible power supply host (70) is located in the accommodation spaces.

10. The energy storage integrated control cabinet (100) of claim 9, wherein a second front end surface (511) of the upper frame (510) in the first direction is flush with a first front end surface (103) of the cabinet body (10) in the first direction, a third front end surface (521) of the lower frame (520) in the first direction is recessed relative to the first front end surface (103) of the cabinet body (10) to form a mounting position, and a control host (80) of the energy storage integrated control cabinet (100) is disposed in the mounting position.

11. The energy storage integrated control cabinet (100) of claim 9, wherein at least one of the upper frame (510) and the lower frame (520) is connected with bearing guide rails (540), each of the bearing guide rails (540) comprises a fixed section (541) and a movable section (542) slidably connected to each other; and in the first direction, the fixed section (541) is fixed to the cabinet body 100, the movable section (542) is slidably engaged with the fixed section (541) and fixedly connected to the upper frame (510) or the lower frame (520), and a front end of at least one movable section (542) is provided with a locking structure (543) configured to engage with the cabinet body (10) to fix the mounting bracket (50) within the uninterruptible power supply compartment (110).

12. The energy storage integrated control cabinet (100) of claim 9, wherein the uninterruptible power supply compartment (110) and the power distribution compartment (120) are separated by a second partition plate, a gap (105) is formed between the second partition plate (123) and a bottom of the lower frame (520), and an output cable of the uninterruptible power supply (60) is partially accommodated in the gap (105).

13. The energy storage integrated control cabinet (100) of claim 12, wherein the upper frame (510) comprises an upper base plate (512), the lower frame (520) comprises a lower base plate (522) and a top plate (523) configured to support the lower base plate (522), the upper base plate (512) is provided with a first through hole (513), the lower frame (520) is provided with a second through hole (524) penetrating through the lower base plate (522) and the top plate (523), in the first direction, both the first through hole (513) and the second through hole (524) are proximal to a rear end surface (106) of the cabinet body (10), and the second through hole (524) is in communication with the gap (105).

14. The energy storage integrated control cabinet (100) of claim 13, wherein the lower frame (520) further comprises two lower side plates (525) spaced apart along the second direction and two lower limiting plates (526) spaced apart along the first direction, the lower side plates (525), the lower limiting plates (526), the top plate (523) and the lower base plate (522) are configured to enclose an accommodation space; the lower side plates (525) and upper side plates (514) are connected by connecting plates (550); and two limiting posts (527) are spaced apart along the second direction in the accommodation space of the lower frame (520), the two limiting posts (527) are fixedly connected to the lower base plate (522) in the height direction of the cabinet body (10) and configured to support the top plate (523), the two limiting posts (527) are further configured to divide the accommodation space of the lower frame (520) into two parts in the second direction, and one uninterruptible power supply (60) is accommodated in each of the two parts.

15. An energy storage system (1), comprising a container body (10) and the energy storage integrated control cabinet (100) of any one of claims 1 to 14, wherein the container body (10) is provided with a liquid cooling unit (300) inside; and the energy storage integrated control cabinet (100) is disposed in the container body (10) and arranged side by side with the liquid cooling unit (300) in a second direction perpendicular to the first direction.
